(19) Europäisches Patentamt / European Patent Office / Office européen des brevets

(11) **EP 1 554 565 B1**

(12) **FASCICULE DE BREVET EUROPEEN**

(45) Date de publication et mention
de la délivrance du brevet:
**02.09.2015 Bulletin 2015/36**

(21) Numéro de dépôt: **03767940.4**

(22) Date de dépôt: **23.10.2003**

(51) Int Cl.:
**G01N 21/64** *(2006.01)*

(86) Numéro de dépôt international:
**PCT/FR2003/050103**

(87) Numéro de publication internationale:
**WO 2004/040269 (13.05.2004 Gazette 2004/20)**

(54) **DISPOSITIF DE LECTURE DE LUMINESCENCE INTEGRE**

INTEGRIERTES LUMINESZENZLESEGERÄT

INTEGRATED LUMINESCENCE READ DEVICE

(84) Etats contractants désignés:
**AT BE BG CH CY CZ DE DK EE ES FI FR GB GR
HU IE IT LI LU MC NL PT RO SE SI SK TR**

(30) Priorité: **24.10.2002 FR 0213302**

(43) Date de publication de la demande:
**20.07.2005 Bulletin 2005/29**

(73) Titulaires:
- **Commissariat à l'Énergie Atomique
  et aux Énergies Alternatives
  75015 Paris (FR)**
- **Biom Rieux S.A.
  69280 Marcy l'Etoile (FR)**

(72) Inventeurs:
- **LABEYE, Pierre
  F-38000 GRENOBLE (FR)**
- **POUTEAU, Patrick
  F-38240 MEYLAN (FR)**
- **PERRAUT, François
  F-38134 SAINT JOSEPH DE RIVIERE (FR)**
- **GINOT, Frédéric
  F-38120 SAINT EGREVE (FR)**

(74) Mandataire: **Ahner, Philippe et al
BREVALEX
95, rue d'Amsterdam
75378 Paris Cedex 8 (FR)**

(56) Documents cités:
WO-A-01/51658    WO-A1-02/16912
CH-A- 660 633    US-A- 6 010 867

## Description

## DOMAINE TECHNIQUE

L'invention concerne un dispositif de lecture de luminescence intégré. Elle trouve une application dans le domaine des biopuces, c'est-à-dire des micro-dispositifs destinés à recevoir des échantillons biologiques que l'on désire tester. Elle s'applique notamment à un nouveau schéma de biopuces intégrant la fonction de lecture de luminescence des échantillons biologiques dans la puce.

## ETAT DE LA TECHNIQUE ANTERIEURE

Dans le domaine des biopuces, le test d'échantillons biologiques se fait le plus souvent par détection optique de fluorescence. Tous ces échantillons sont soumis à une excitation qui provoque en particulier une émission de lumière ou luminescence. L'excitation peut être une réaction chimique qui produit de la lumière. Mais très souvent, l'excitation est un faisceau lumineux et l'échantillon produit alors une lumière dite de fluorescence. La configuration la plus courante consiste à utiliser un microscope fonctionnant en épi-illumination, c'est-à-dire que la surface de la puce présentant les échantillons biologiques est éclairée à l'aide d'une source de lumière focalisée par un objectif de microscope et que la lumière de fluorescence émise par un échantillon biologique est collectée par le même objectif ou par des réseaux de diffraction gravés redirigeant la lumière de fluorescence émise dans certaines directions.

Selon une deuxième configuration, l'excitation des particules fluorescentes est effectuée par un faisceau lumineux véhiculé par un guide plan réalisé dans un plan de la puce et la récupération de la lumière de fluorescence est effectuée par un microscope standard.

Selon une troisième configuration, l'excitation de fluorescence se fait par un guide d'onde réalisé dans un plan de la puce et la récupération de la lumière de fluorescence émise est effectuée par un guide d'onde réalisé également dans le plan de la puce (voir le document CH-A-660 633).

Selon une quatrième configuration, beaucoup plus rare, l'excitation de fluorescence se fait au moyen d'un faisceau éclairant la face de la puce présentant les échantillons biologiques et la récupération de la lumière de fluorescence émise est effectuée par un guide d'onde réalisé dans le plan de la puce (voir les documents DE-A-196 51 935 et JP-A-11-023 468).

Toutes ces configurations de l'art antérieur présentent un certain nombre d'inconvénients.

Lorsque le faisceau d'excitation est introduit dans la puce au moyen d'un guide optique, il se pose le problème du couplage de la lumière d'excitation dans le guide d'onde optique, ce qui impose des tolérances de positionnement assez sévères et donc des systèmes d'alignement présentant un coût important.

D'autre part, il se pose le problème de l'efficacité de la collection de la lumière de fluorescence émise. En effet, la lumière émise par les particules ou molécules fluorescentes est principalement confinée dans le plan de la puce en étant émise dans toutes les directions de ce plan.

L'article "Integrating Waveguide Biosensor" de F.S. Ligler et al., paru dans Analytical Chemistry, Vol. 74, N°3, 1er février 2002, pages 713 à 719, propose d'associer des capillaires à une biopuce pour la détection optique de fluorescence. Cependant, les avantages présentés par ces capillaires ne sont que fonctionnels. Ils ne permettent aucune optimisation pour augmenter les performances des mesures. Enfin, du fait de leur géométrie, les capillaires, comme les capteurs à fibre optique, ne permettent pas de fournir un support avec de nombreux plots de reconnaissance biologique.

Le document US-A-6 010 867 divulgue un dispositif de test d'au moins un échantillon par détection optique de luminescence, comprenant un site de réception de l'échantillon, le site étant disposé de façon que l'échantillon puisse recevoir une excitation de luminescence et émettre une lumière de luminescence dans un plan de guidage optique. Le dispositif comprend également des moyens de collecte connectés optiquement au plan de guidage optique pour recueillir de la lumière de luminescence. Il comprend en outre, dans le plan de guidage optique, des moyens permettant de renvoyer vers les moyens de collecte une partie de la lumière de luminescence émise dans le plan de guidage optique et non directement recueillie par les moyens de collecte.

Le document WO-A-02/16912 divulgue un dispositif de support d'éléments chromophores comprenant des moyens de support pour recevoir sur une face supérieure des éléments chromophores aptes à émettre de la lumière dans des conditions choisies, et des moyens de concentration de lumière pour récupérer la lumière émise par chaque élément chromophore dans une partie de la région qui l'environne et délivrer cette lumière récupérée vers un dispositif de collecte.

## EXPOSÉ DE L'INVENTION

L'invention permet de remédier à ces problèmes en privilégiant la lumière de luminescence émise et qui est piégée dans la puce. En réalisant un guide d'onde, par exemple à fort écart d'indice, il y a plus de lumière émise dans la puce que vers l'extérieur de la puce. Cependant, si cette lumière reste confinée dans un plan de la puce, elle est émise dans toutes les directions de ce plan.

L'invention a donc pour objet un dispositif de test d'au moins un échantillon par détection optique de luminescence comme défini dans la revendication 1.

Les moyens de collecte peuvent comprendre au moins un guide optique. Ils peuvent être localisés sur une tranche du dispositif sur laquelle aboutit le plan de guidage optique. Ils peuvent aussi comprendre des moyens de filtrage du faisceau lumineux d'excitation.

Le dispositif de test peut comprendre plusieurs sites de réception d'échantillons.

Il peut être réalisé à partir d'un substrat de silicium recouvert successivement d'une première couche d'oxyde de silicium, d'une couche de nitrure de silicium servant de plan de guidage optique et d'une deuxième couche d'oxyde de silicium dans laquelle est formé le site de réception de l'échantillon.

L'échantillon peut être un échantillon biologique choisi parmi un microorganisme tel qu'une bactérie, un champignon, un virus, un composé chimique, une cellule saine ou tumorale, une molécule telle qu'un peptide, une protéine, un enzyme, un polysaccharide, un lipide, une lipoprotéine, un acide nucléique, une hormone, un antigène, un anticorps, un facteur de croissance, un haptène.

## BREVE DESCRIPTION DES DESSINS

L'invention sera mieux comprise et d'autres avantages et particularités apparaîtront à la lecture de la description qui va suivre, donnée à titre d'exemple non limitatif, accompagnée des dessins annexés parmi lesquels :

- la figure 1 est une vue schématique et de dessus d'une première variante de réalisation de l'invention,
- la figure 2 est une vue schématique et de dessus d'une deuxième variante de réalisation de l'invention,
- la figure 3 est une vue schématique et de dessus d'une troisième variante de réalisation de l'invention,
- la figure 4 est une vue de dessus montrant un miroir de récupération parabolique utilisable pour la présente invention,
- la figure 5 est une vue de dessus montrant un système de refocalisation de la lumière de fluorescence et utilisable pour un système comparatif,
- la figure 6 est un schéma explicatif du fonctionnement d'un miroir elliptique utilisable pour la présente invention,
- la figure 7 montre une combinaison d'un miroir elliptique et de lentilles utilisable pour la présente invention,
- la figure 8 est une vue en coupe longitudinale d'un dispositif de test selon la présente invention,
- la figure 9 est une vue en coupe transversale d'un dispositif de test selon la présente invention,
- la figure 10 est une vue de dessus d'une partie d'un dispositif de test selon l'invention, cette vue montrant une lentille de focalisation et un guide d'onde optique,
- les figures 11A et 11B sont des vues en coupe de la figure 10, respectivement selon les coupes AA et BB.

## DESCRIPTION DETAILLEE DE MODES DE REALISATION DE L'INVENTION

La suite de la description portera sur le cas particulier de luminescence qu'est la fluorescence.

L'invention permet de réaliser des structures optiques intégrées sur une puce et de récupérer, sur la tranche de la puce, la lumière de fluorescence émise par les échantillons biologiques présents sur cette puce. L'excitation des échantillons peut se faire indifféremment par le dessus, par le dessous si le support utilisé est transparent à la longueur d'onde du faisceau d'excitation ou par une même guide optique servant à véhiculer le faisceau d'excitation et la lumière de fluorescence émise.

Selon l'invention, on cherche à récupérer le maximum de lumière de fluorescence émise dans toutes les directions du plan de guidage optique et à diriger la lumière de fluorescence récupérée vers un ou plusieurs photodétecteurs.

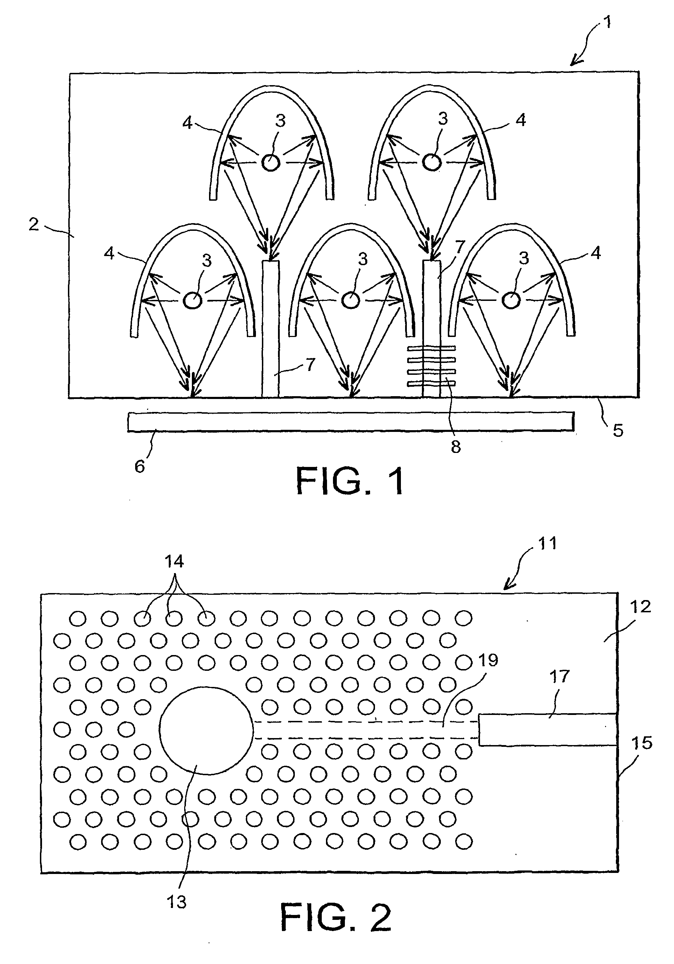

La figure 1 est une vue schématique et de dessus d'une première variante de réalisation de l'invention. Elle montre le dispositif de test 1 selon une coupe correspondant au plan de guidage optique 2 du dispositif. La référence 3 désigne des plots de test supportant un échantillon à analyser. Un miroir elliptique 4 entoure chaque plot 3 de façon à diriger la lumière de fluorescence émise par l'échantillon vers la tranche 5 du dispositif qui est équipée de barrettes de photodétecteurs 6.

Pour les plots de test 3 situés le plus près de la tranche 5, les miroirs 4 focalisent la lumière de fluorescence directement sur la tranche 5. Pour les plots de test 3 situés plus loin de la tranche 5, les miroirs 4 focalisent la lumière de fluorescence sur une extrémité d'un guide optique 7 qui véhicule cette lumière jusqu'à la tranche 5. Les moyens de collecte peuvent donc être constitués simplement par la tranche du dispositif de test ou être constitués par la combinaison formée par un guide optique et la tranche.

Eventuellement, un réseau de filtrage 8 peut être associé au guide optique 7 pour diminuer la lumière parasite véhiculée par ce guide. Le filtrage peut être obtenu par un réseau de Bragg ou par un coupleur évanescent.

La figure 2 est une vue schématique et de dessus d'une deuxième variante de réalisation de l'invention. Elle montre le dispositif de test 11 selon une coupe correspondant au plan de guidage optique 12 du dispositif. La référence 13 désigne un plot de test supportant un échantillon à analyser. Dans cette variante, le plan de guidage optique comporte une structure à bande interdite photonique, adaptée à la bande spectrale d'émission de fluorescence, constituée d'une pluralité de plots 14 distribués de façon à canalise la lumière de fluorescence vers un passage 19.

Dans l'exemple représenté, un guide optique 17 permet de véhiculer la lumière de fluorescence sortant du passage 19 jusqu'à la tranche 15 du dispositif 11. L'avantage des structures à bande interdite photonique est qu'elles peuvent aussi réaliser la fonction de filtrage de la lumière d'excitation.

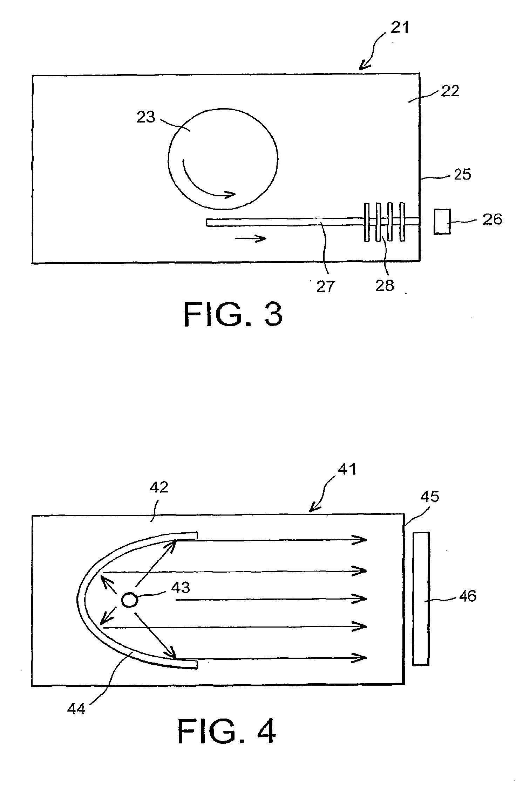

La figure 3 est une vue schématique et de dessus d'une troisième variante de réalisation de l'invention. Elle montre le dispositif de test 21 selon une coupe correspondant au plan de guidage optique 22 du dispositif. La référence 23 désigne un plot de test sur un disque résonnant, le plot de test supportant un échantillon à analyser.

Le disque résonnant permet de mieux conditionner la lumière émise par les fluorophores de l'échantillon. Dans ce cas, la lumière émise va se propager en rond suivant les modes de propagation du disque et, dans l'exemple représenté, est couplée par onde évanescente vers un microguide 27 situé à proximité du disque résonnant. Si le disque est correctement dimensionné pour avoir des conditions de résonance correspondant à la longueur d'onde d'émission du fluorophore, on peut bénéficier de l'effet amplificateur de résonance dans la cavité pour maximiser le signal. La condition de résonance est donnée par la formule :

$$\frac{2\pi n L}{\lambda} = 2k\pi$$

où n est l'indice effectif du premier mode de propagation dans la structure guidante, L est le périmètre du disque, λ est la longueur d'onde de résonance et k un nombre entier quelconque correspondant à l'ordre d'interférence.

La géométrie du coupleur peut être optimisée par différentes techniques (BPM, théorie des modes couplés, etc.), l'objectif étant de maximiser la puissance optique de sortie compte tenu du résonateur et des différentes pertes de propagation dans le disque.

Le microguide 27 véhicule la lumière de fluorescence émise jusqu'à la tranche 25 du dispositif 21 où un photodétecteur 26 reçoit la lumière de fluorescence détectée. Un réseau de filtrage 28 peut éventuellement être associé au microguide 27.

La figure 4 est une vue de dessus montrant un miroir de récupération parabolique utilisable pour la présente invention. Sur le plan de guidage optique 42 d'un dispositif de test 41 ou puce, un seul plot de test 43 a été représenté. Il est entouré d'un miroir parabolique 44 qui permet de renvoyer vers la tranche 45 du dispositif, sur laquelle est disposé un photodétecteur grande surface 46, des rayons lumineux d'une lumière de fluorescence. Les rayons lumineux renvoyés sont parallèles entre eux.

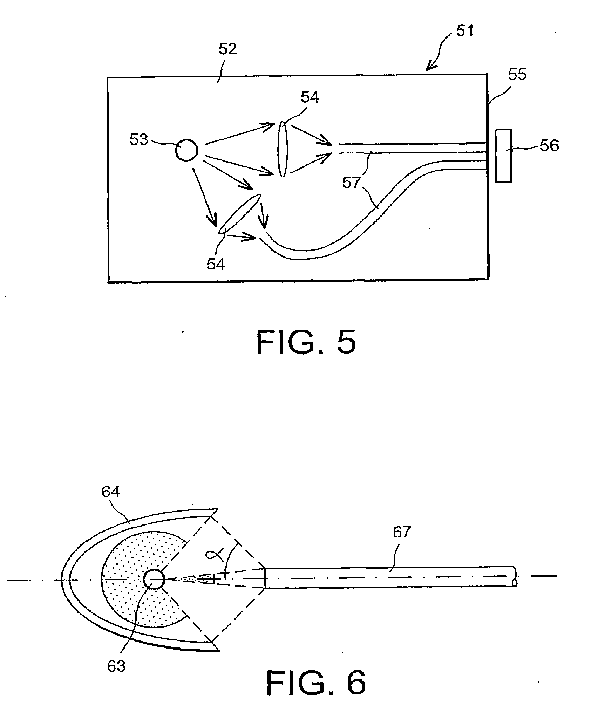

La figure 5 est une vue de dessus montrant un système de refocalisation de la lumière de fluorescence. Sur le plan de guidage optique 52 d'un dispositif de test 51, un seul plot de test 53 a été représenté. Deux lentilles de focalisation 54 réalisées sur le plan de guidage optique 52 permettent de récupérer une partie de la lumière de fluorescence issue du plot 53. Les lentilles 54 focalisent la lumière récupérée vers une première extrémité de guides 57 qui véhiculent la lumière récupérée vers un photodétecteur 56 situé sur la tranche 55 du dispositif 51.

La figure 6 est un schéma explicatif du fonctionnement d'un miroir elliptique utilisable pour la présente invention. Le miroir elliptique 64 entoure un plot 63. Le plot 63 est placé sur l'axe du miroir 64 qui se confond avec l'axe d'un guide optique 67 disposé sur le plan de guidage optique.

On appelle r le rayon du plot d'émission 63, a le grand rayon du miroir elliptique, b son petit rayon et f son foyer. La relation entre f, a et b est donnée par la formule suivante :

$$f = \sqrt{a^2 - b^2}$$

L'image du plot par l'ellipse est donc à une distance 2f du plot. Soit d, le diamètre du guide 67, $n_c$ l'indice du coeur du guide et $n_g$ l'indice du milieu entourant le coeur du guide. Dans ces conditions, l'ouverture numérique O.N. est donnée par la relation :

$$O.N. = \sqrt{n_c^2 - n_g^2}$$

et l'angle maximum de récupération de la lumière dans le milieu environnant (voir la figure 6) est donné par la formule suivante :

$$\alpha = \arcsin\left\{\frac{\sqrt{n_c^2 - n_g^2}}{n_g}\right\}.$$

Dans ce cas, le secteur γ de lumière récupérée par le miroir elliptique et transmis dans le guide est donné par la formule :

$$\gamma = 2\left[\pi - arctg\left(\frac{f - \dot{x}}{f + x} tg\alpha\right)\right]$$

avec

$$x = \frac{tg^2\alpha.a^2 f - ab^2 / \cos\alpha}{b^2 + a^2 tg^2\alpha}.$$

A ce secteur, on peut rajouter la lumière directement transmise du plot 63 vers le guide et correspondant au secteur β, soit :

$$\beta = 2arctg\frac{d}{4f}$$

Le taux de lumière récupérée est donc :

$$\eta = \frac{\beta + \gamma}{2\pi}$$

En prenant par exemple une couche de guidage en nitrure de silicium confinée dans de la silice, un guide de 100 $\mu$m de large et un miroir elliptique de grand axe 1 mm et de petit axe 0,5 mm, on trouve les valeurs suivantes : f = 0,86 mm et $\eta$ = 95%.

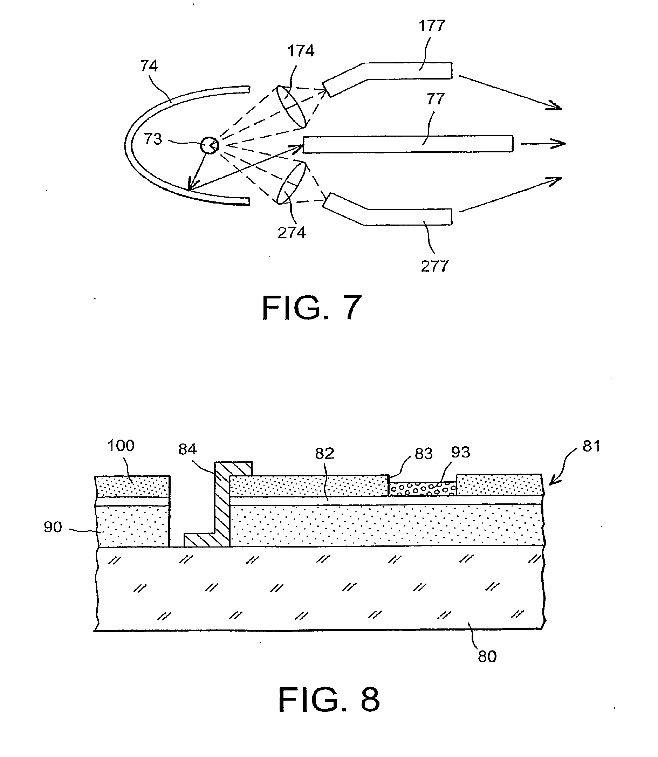

La figure 7 montre une combinaison d'un miroir elliptique et de lentilles utilisable pour la présente invention. Le plot 73 est disposé entre un miroir elliptique 74 et deux lentilles de focalisation 174 et 274. Le miroir elliptique 74 renvoie une partie de la lumière de fluorescence vers le guide 77 comme cela est montré sur la figure 6. La lumière non récupérée par le miroir elliptique 74 ou non directement captée par le guide 77 est pratiquement récupérée en totalité par les lentilles 174 et 274 qui focalisent la lumière reçue sur les extrémités des guides 177 et 277 respectivement. Les guides 77, 177 et 277 véhiculent alors la lumière de fluorescence émise à partir du plot 73 vers un photodétecteur.

Les structures de récupération de lumière représentée sur les figures 1 à 7 sont réalisées dans le plan des dispositifs par exemple par photolithographie et gravure.

La figure 8 est une vue en coupe longitudinale d'un dispositif de test selon la présente invention. Le dispositif 81 est réalisé à partir d'un substrat 80 qui est par exemple en silicium pour ses bonnes propriétés mécaniques. Une première couche de silice 90 est formée sur le substrat 80, par exemple par oxydation thermique du silicium. La couche 90 peut avoir 1,5 $\mu$m d'épaisseur, ce qui est suffisant pour isoler optiquement la couche guidante 82 du substrat 80. La couche 90 supporte donc la couche guidante 82, par exemple en nitrure de silicium déposé par LPCVD. Une épaisseur comprise entre 50 nm et 200 nm permet un guidage monomode de la lumière à la longueur d'onde classique d'émission des fluorophores, du vert (0,5 $\mu$m) au proche infrarouge (jusqu'à 1 $\mu$m).

La couche guidante 82 supporte une deuxième couche de silice 100 déposée par exemple par PECVD. Une épaisseur supérieure à 1 $\mu$m permet d'isoler le guide optique de l'interface couche de silice 100/air.

Des motifs sont réalisés sur le substrat recouvert de ses différentes couches, par exemple par photolithographie et gravure RIE. Ainsi, la couche 100 est gravée jusqu'à la couche guidante 82 pour constituer un site 83 de réception d'un échantillon 93 formant le plot émetteur de lumière de fluorescence. Tous ces matériaux sont particulièrement intéressants car le greffage des particules biologiques y est simple. Les couches 100, 82 et 90 sont gravées jusqu'au substrat 80. Un miroir 84 de récupération de la lumière de fluorescence y est réalisé sur un flanc de gravure. Le miroir peut être constitué par de l'aluminium déposé par évaporation à travers un masque de type pochoir.

Avant le dépôt de la deuxième couche de silice, la couche de nitrure de silicium peut éventuellement être gravée par RIE pour réaliser des guides permettant de transporter la lumière jusqu'au bord de la puce.

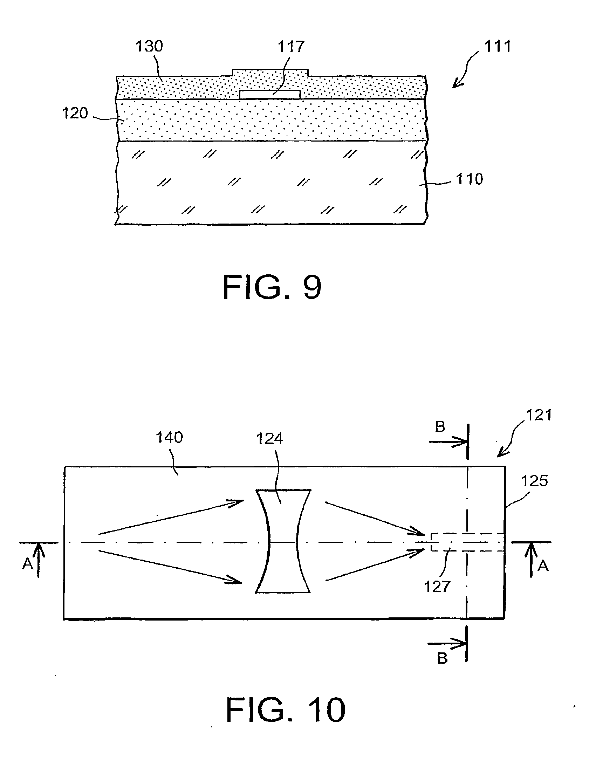

La figure 9 est une vue en coupe transversale du dispositif de test 111 présentant un tel guide. La coupe montre un substrat 110 en silicium supportant une première couche de silice 120, un guide optique 117 en nitrure de silicium et une deuxième couche de silice 130. Le guide peut avoir une largeur comprise entre 1 $\mu$m (dimension limite des possibilités de la photolithographie par contact) et plusieurs dizaines, voire plusieurs centaines, de $\mu$m.

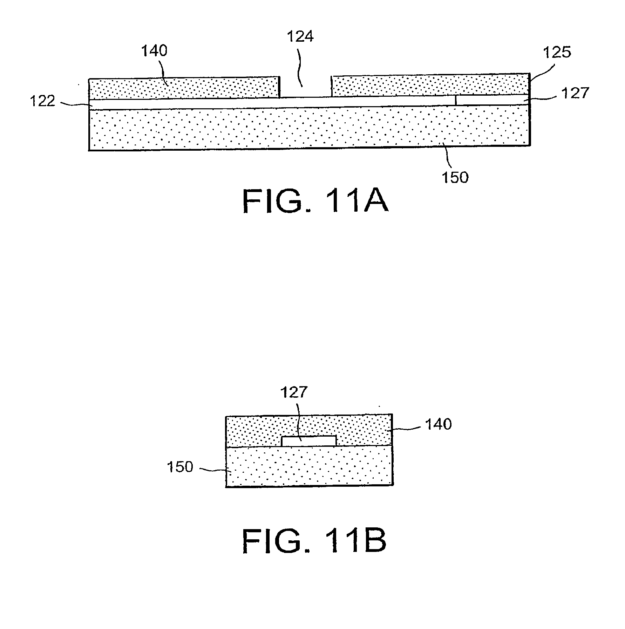

Les figures 10, 11A et 11B se rapportent à une partie d'un dispositif de test selon l'invention et montrent une lentille de focalisation et un guide d'onde optique.

La figure 10 est une vue de dessus d'une partie d'un dispositif de test 121. Elle montre la couche de confinement supérieure 140 de la couche guidante. Les flèches représentent la direction de propagation d'une lumière de fluorescence émise à partir d'un plot non représenté. La figure 10 montre une lentille de focalisation 124 et un guide optique 127 destiné à véhiculer la lumière focalisée jusqu'à la tranche 125 du dispositif 121.

La lentille de focalisation 124 est obtenue par gravure de la couche de confinement supérieure 140 jusqu'à atteindre la couche guidante 122 (voir la figure 11A). La zone de la lentille ayant par gravure un indice plus faible que le milieu environnant, la forme représentée est convergente dans ce cas précis. La figure 11A montre également la couche de confinement inférieure 150. Le substrat n'a pas été représenté.

La figure 11B montre le guide d'onde 127 destiné à véhiculer la lumière de fluorescence, compris entre les couches 150 et 140.

Selon l'invention, plusieurs phénomènes optiques sont mis à profit par l'utilisation de structures optiques intégrées. L'utilisation de cristaux photoniques inscrits à la surface de la puce peut jouer directement sur la probabilité d'émission de la fluorescence en "forçant" cette fluorescence dans une certaine plage de longueur d'onde permettant de s'affranchir des fonctions de filtrage nécessaires à la détection. Il est important de mentionner ici qu'il ne s'agit pas d'un filtrage de longueur d'onde qui aurait pour effet de ne garder que la partie de lumière émise dans une certaine plage de longueur d'onde mais bien d'un mécanisme "forçant" l'émission à ces longueurs d'onde. Toute l'énergie utile est donc à la bonne longueur d'onde. On obtient donc une première amélioration de la quantité de lumière à détecter.

Ensuite, la possibilité de réaliser des structures intégrées sur la puce peut aussi permettre de mieux récupérer la lumière émise dans la puce. On peut réaliser des microguide transportant la lumière vers des détecteurs, réaliser des miroirs permettant de refocaliser la lumière émise, ou encore des filtres de longueur d'onde permettant d'améliorer le rapport signal sur bruit.

Globalement, l'invention permet l'obtention de systèmes (lecteur et biopuce) de tests de fluorescence à coût très bas. En effet, si l'éclairage n'est pas effectué par le guide mais simplement par le dessus, le système de lecture ne nécessite pas d'alignement précis de la puce par rapport au lecteur et notamment par rapport à la source d'excitation. Par ailleurs, il n'est pas non plus nécessaire d'aligner précisément la puce par rapport à un éventuel système d'imagerie pour détecter les plots de fluorescence. De plus, la récupération s'effectuant par la tranche, on peut encore diminuer les coûts en choisissant une barrette de photodétecteurs plutôt qu'une matrice de photodétecteurs. Enfin, toutes les fonctions optiques inscrites sur la puce, par exemple la refocalisation du plot ou le filtrage, permettent de ne pas avoir à inclure ces fonctions dans le lecteur qui se résume en fait à une source d'éclairage large, un réceptacle pour la puce et une barrette de photodétecteurs. La collection de la fluorescence étant extrêmement efficace, un tel lecteur bas coût sera en outre un lecteur à haute sensibilité.

## Revendications

1. Dispositif de test (1, 11, 21, 41, 51, 81, 111) d'au moins un échantillon par détection optique de luminescence, comprenant un substrat (80, 110) supportant un site de réception de l'échantillon (3, 13, 23, 43, 53, 63, 73), le site (3, 13, 23, 43, 53, 63, 73) étant disposé de façon que l'échantillon reçoive une excitation de luminescence et émette une lumière de luminescence dans un plan de guidage optique du dispositif (1, 12, 22, 42, 52), le plan de guidage optique (2, 12, 22, 42 52) étant un plan parallèle au substrat (80, 110) qui permet de confiner la plus grande partie de la lumière de la luminescence émise, le dispositif (80, 110) comprenant également des moyens de collecte (5, 15, 25, 45, 55, 125; 7, 17, 27, 57, 67, 77, 127, 177, 277) situés dans un plan parallèle au substrat (80, 110) et connectés optiquement au plan de guidage optique (2, 12, 22, 42 52) pour recueillir de la lumière de luminescence, le dispositif (1, 11, 21, 41, 51, 81, 111) comprenant en outre, dans le plan de guidage optique (2, 12, 22, 42 52), des moyens (4, 14, 44, 54, 64, 74) permettant de renvoyer vers les moyens de collecte (5, 15, 25, 45, 55, 125; 7, 17, 27, 57, 67, 77, 127, 177, 277) une partie de la lumière de luminescence émise dans le plan de guidage optique (2, 12, 22, 42 52) et non directement recueillie par les moyens de collecte (5, 15, 25, 45, 55, 125; 7, 17, 27, 57, 67, 77, 127, 177, 277), le dispositif (1, 11, 21, 41, 51, 81, 111) supportant également des moyens de détection de la lumière de luminescence (6, 26, 46, 56) disposés selon un plan perpendiculaire audit plan parallèle au substrat (80, 110) et en sortie des moyens de collecte (5, 15, 25, 45, 55, 125; 7, 17, 27, 57, 67, 77, 127, 177, 277), les moyens permettant de renvoyer une partie de la lumière de luminescence vers les moyens de collecte étant choisis parmi : un miroir elliptique (4, 64, 74), un miroir parabolique (44), une structure à bande interdite photonique (14) et une structure de type disque résonnant.

2. Dispositif de test (1, 11, 21, 41, 51, 81, 111) selon la revendication 1, **caractérisé en ce que** les moyens permettant de renvoyer une partie de la lumière de luminescence vers les moyens de collecte comprennent en outre une ou plusieurs lentilles de focalisation (174, 274).

3. Dispositif de test (1, 11, 21, 41, 51, 81, 111) selon la revendication 1, **caractérisé en ce que** les moyens de collecte comprennent au moins un guide optique (7, 17, 27, 57, 67, 177, 277).

4. Dispositif de test (1, 11, 21, 41, 51, 81, 111) selon la revendication 1, **caractérisé en ce que** les moyens de collecte sont localisés sur une tranche (5, 15, 25, 45, 55, 125) de dispositif sur laquelle aboutit ledit plan de guidage optique (2,12,22,42,52)

5. Dispositif de test selon la revendication 1, **caractérisé en ce que** l'excitation est un faisceau lumineux et **en ce que** les moyens de collecte (5,15,25,45,55,125;7,17,27,57,67,77,127,177,277) comprennent des moyens de filtrage du faisceau lumineux d'excitation (8, 28).

6. Dispositif de test selon la revendication 1, **caractérisé en ce qu'**il comprend plusieurs sites de réception d'échantillons.

7. Dispositif de test selon la revendication 1, **caractérisé en ce qu'**il est réalisé à partir d'un substrat de silicium (80) recouvert successivement d'une première couche d'oxyde de silicium (90), d'une couche de nitrure de silicium servant de plan de guidage optique (82) et d'une deuxième couche d'oxyde de silicium (100) dans laquelle est formé le site (83) de réception de l'échantillons (93).

8. Dispositif de test selon l'une quelconque des revendications 1 à 7, **caractérisé en ce que** l'échantillon est un échantillon biologique choisi parmi un microorganisme tel qu'une bactérie, un champignon, un virus, un composé chimique, une cellule saine ou tumorale, une molécule telle qu'un peptide, une protéine, un enzyme, un polysaccharide, un lipide, une lipoprotéine, un acide nucléique, une hormone, un antigène, un anticorps, un facteur de croissance, un haptène.

## Patentansprüche

1. Testvorrichtung (1, 11, 21, 41, 51, 81, 111) für wenigstens eine Probe durch optische Lumineszenzerfassung, umfassend ein Substrat (80, 110), das eine Probenaufnahmestelle (3, 13, 23, 43, 53, 63, 73) trägt, wobei die Stelle (3, 13, 23, 43, 53, 63, 73) derart angeordnet ist, dass die Probe eine Lumineszenzanregung empfängt und ein Lumineszenzlicht in einer optischen Führungsebene der Vorrichtung (1, 12, 22, 42, 52) emittiert, wobei die optische Führungsebene (2, 12, 22, 42, 52) eine Ebene parallel zum Substrat ist, die eine Begrenzung des größten Teils des emittierten Lumineszenzlichts ermöglicht, wobei die Vorrichtung (1, 11, 21, 41, 51, 81, 111) ferner Sammelmittel (5, 15, 25, 45, 55, 125; 7, 17, 27, 57, 67, 77, 127, 177, 277) umfasst, die in einer Ebene parallel zum Substrat (80, 110) angeordnet und optisch mit der optischen Führungsebene (2, 12, 22, 42, 52) verbunden sind, um Lumineszenzlicht einzusammeln, wobei die Vorrichtung (1, 11, 21, 41, 51, 81, 111) ferner in der optischen Führungsebene (2, 12, 22, 42, 52) Mittel (4, 14, 44, 54, 64, 74) umfasst, die es erlauben, an die Sammelmittel (5, 15, 25, 45, 55, 125; 7, 17, 27, 57, 67, 77, 127, 177, 277) einen Teil des Lumineszenzlichts zurückzuschicken, das in der optischen Führungsebene (2, 12, 22, 42, 52) emittiert und nicht direkt durch die Sammelmittel (5, 15, 25, 45, 55, 125; 7, 17, 27, 57, 67, 77, 127, 177, 277) eingesammelt wurde, wobei die Vorrichtung (1, 11, 21, 41, 51, 81, 111) ferner Mittel zur Erfassung des Lumineszenzlichts (6, 26, 46, 56) trägt, die in einer Ebene orthogonal zu der Ebene angeordnet sind, welche parallel zum Substrat (80, 110) ist, sowie am Ausgang der Sammelmittel (5, 15, 25, 45, 55, 125; 7, 17, 27, 57, 67, 77, 127, 177, 277), wobei die Mittel, die es erlauben, einen Teil des Lumineszenzlichts an die Sammelmittel zurückzuschicken, ausgewählt sind aus: einem elliptischen Spiegel (4, 64, 74), einem parabolischen Spiegel (44), einer Struktur mit verbotenem photonischen Band (14) und einer Struktur vom Typ Resonanzscheibe.

2. Testvorrichtung (1, 11, 21, 41, 51, 81, 111) nach Anspruch 1, **dadurch gekennzeichnet, dass** die Mittel, die es erlauben, einen Teil des Lumineszenzlichts an die Sammelmittel zurückzuschicken, ferner eine oder mehrere fokussierende Linsen (174, 274) umfassen.

3. Testvorrichtung (1, 11, 21, 41, 51, 81, 111) nach Anspruch 1, **dadurch gekennzeichnet, dass** die Sammelmittel wenigstens einen optischen Leiter (7, 17, 27, 57, 67, 177, 277) umfassen.

4. Testvorrichtung (1, 11, 21, 41, 51, 81, 111) nach Anspruch 1, **dadurch gekennzeichnet, dass** die Sammelmittel in einem Bereich (5, 15, 25, 45, 55, 125) der Vorrichtung angeordnet sind, an dem die optische Führungsebene (2, 12, 22, 42, 52) angrenzt.

5. Testvorrichtung nach Anspruch 1, **dadurch gekennzeichnet, dass** die Anregung ein Lichtstrahl ist, und dass die Sammelmittel (5, 15, 25, 45, 55, 125; 7, 17, 27, 57, 67, 77, 127, 177, 277) Mittel zur Filterung des Anregungslichtstrahls (8, 28) umfassen.

6. Testvorrichtung nach Anspruch 1, **dadurch gekennzeichnet, dass** sie mehrere Probenaufnahmestellen umfasst.

7. Testvorrichtung nach Anspruch 1, **dadurch gekennzeichnet, dass** sie ausgehend von einem Siliziumsubstrat (80) hergestellt ist, das nacheinander mit einer ersten Schicht aus Siliziumoxid (90), mit einer Siliziumnitridschicht, die als optische Führungsebene (82) dient, und mit einer zweiten Siliziumoxidschicht (100) bedeckt ist, in der die Stelle (83) zur Aufnahme der Probe (93) gebildet ist.

8. Testvorrichtung nach einem der Ansprüche 1 bis 7, **dadurch gekennzeichnet, dass** die Probe eine biologische Probe ist, ausgewählt aus einem Mikroorganismus wie zum Beispiel einem Bakterium, einem Pilz, einem Virus, einer chemischen Verbindung, einer gesunden oder Tumor-Zelle, einem Molekül wie zum Beispiel einem Peptid, einem Protein, einem Enzym, einem Polysaccharid, einem Lipid, einem Lipoprotein, einer Nukleinsäure, einem Hormon, einem Antigen, einem Antikörper, einem Wachstumsfaktor, einem Hapten.

**Claims**

1. Device (1, 11, 21, 41, 51, 81, 111) for testing at least one sample by optical detection of luminescence, comprising a substrate (80, 110) supporting a site for receiving the sample (3, 13, 23, 43, 53, 63, 73), said site (3, 13, 23, 43, 53, 63, 73) being arranged in such a way that the sample receives a luminescence excitation and emits a luminescence light in an optical guiding plane of the device (1, 12, 22, 42, 52), the optical guiding plane (1, 12, 22, 42, 52) being a plane parallel to the substrate (80, 110) which permits to confine most of the emitted luminescence light, the device (1, 11, 21, 41, 51, 81, 111) further comprising collection means (5, 15, 25, 45, 55, 125; 7, 17, 27, 57, 67, 77, 127, 177, 277) located in a plane parallel to the substrate (80, 110) and optically connected to the optical guiding plane (1, 12, 22, 42, 52) for collecting luminescence light, the device (1, 11, 21, 41, 51, 81, 111) further comprising, in the optical guiding plane (1, 12, 22, 42, 52), means (4, 14, 44, 54, 64, 74) making it possible to send back towards the collection means (5, 15, 25, 45, 55, 125; 7, 27, 57, 67, 77, 127, 177, 277) a part of the luminescence light emitted in the optical guiding plane (1, 12, 22, 42, 52) and not directly collected by the collection means (5, 15, 25, 45, 55, 125; 7, 27, 57, 67, 77, 127, 177, 277), the device (1, 11, 21, 41, 51, 81, 111) further supporting means of detecting luminescence light (6, 26, 46, 56) arranged along a plane perpendicular to said plane parallel to the substrate (80, 110) and at the output of the collection means (5, 15, 25, 45, 55, 125; 7, 17, 27, 57, 67, 77, 127, 177, 277), the means making it possible to send back a part of the luminescence light towards the collection means being chosen among: an elliptic mirror (4, 64, 74), a parabolic mirror (44), a photonic forbidden band structure (14) and a resonating disc type structure.

2. Test device (1, 11, 21, 41, 51, 81, 111) according to claim 1, **characterised in that** the means making it possible to send back a part of the luminescence light towards the collection means further comprise one or several focusing lenses (174, 274).

3. Test device (1, 11, 21, 41, 51, 81, 111) according to claim 1, **characterised in that** the collection means comprise at least one optical waveguide (7, 17, 27, 57, 67, 177, 277).

4. Test device (1, 11, 21, 41, 51, 81, 111) according to claim 1, **characterised in that** the collection means are located on a wafer (5, 15, 25, 45, 55, 125) of the device on which said optical guiding plane (2, 12, 22, 42, 52) ends.

5. Test device according to claim 1, **characterised in that** the excitation is a light beam and **in that** the collection means (5, 15, 25, 45, 55, 125; 7, 17, 27, 57, 67, 77, 127, 177, 277) comprise means for filtering the excitation light beam (8, 28).

6. Test device according to claim 1, **characterised in that** it comprises several sample reception sites.

7. Test device according to claim 1, **characterised in that** it is formed from a silicon substrate (80) successively coated with a first layer of silicon oxide (90), a layer of silicon nitride acting as optical guiding plane (82) and a second layer of silicon oxide (100) in which is formed the site (83) for receiving the sample (93).

8. Test device according to any of claims 1 to 7, **characterised in that** the sample is a biological sample chosen from among a micro-organism such as a bacteria, a fungus, a virus, a chemical compound, a healthy or tumorous cell, a molecule such as a peptide, a protein, an enzyme, a polysaccharide, a lipid, a lipoprotein, a nucleic acid, a hormone, an antigen, an antibody, a growth factor, or a hapten.

FIG. 1

FIG. 2

FIG. 3

FIG. 4

FIG. 5

FIG. 6

FIG. 7

FIG. 8

FIG. 9

FIG. 10

140               124                      125

122                                              127

150

# FIG. 11A

127

140

150

# FIG. 11B

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- CH 660633 A
- DE 19651935 A
- JP 11023468 A
- US 6010867 A
- WO 0216912 A

**Littérature non-brevet citée dans la description**

- **F.S. LIGLER et al.** Integrating Waveguide Biosensor. *Analytical Chemistry,* 01 Février 2002, vol. 74 (3), 713-719